# EUROPÄISCHE PATENTSCHRIFT

(11) **EP 3 156 659 B1**
(45) Veröffentlichungstag und Bekanntmachung des Hinweises auf die Patenterteilung: **16.09.2020**
(21) Anmeldenummer: 15189320.3
(22) Anmeldetag: 12.10.2015
(51) Int. Cl.: F04D 29/42, F04D 15/00, F04D 29/48, F24D 3/02, F24D 3/10, F16K 11/048

(54) **PUMPENAGGREGAT UND HYDRAULISCHES SYSTEM**
PUMP UNIT AND HYDRAULIC SYSTEM
POMPE ET SYSTÈME HYDRAULIQUE

(43) Veröffentlichungstag der Anmeldung: 19.04.2017
(73) Patentinhaber: Grundfos Holding A/S, 8850 Bjerringbro (DK)
(72) Erfinder: Blad, Thomas, 8850 Bjerringbro (DK); Mønster, Peter, DK-8900 Randers (DK)
(74) Vertreter: Patentanwälte Vollmann Hemmer Lindfeld Partnerschaft mbB

(56) Entgegenhaltungen:
- EP-A1- 0 394 140
- DE-A1- 19 540 816
- DE-C1- 19 636 855
- DE-U1- 9 013 992

## Beschreibung

Die Erfindung betrifft ein Pumpenaggregat sowie ein hydraulisches System mit einem solchen Pumpenaggregat.

Beispielsweise aus FR 26 46 217 ist ein Pumpenaggregat bekannt, dessen Laufrad von einem Antriebsmotor in zwei Drehrichtungen angetrieben werden kann, wobei in Abhängigkeit von der Drehrichtung ein Ventil im Einlasskanal des Pumpenaggregates geschaltet wird, um zwischen zwei Strömungswegen umzuschalten. Dazu ist im Pumpenraum im Umfangsbereich des Laufrades eine bewegliche Klappe angeordnet, welche von der von dem Laufrad erzeugten Strömung beaufschlagt wird. Je nach Drehrichtung des Laufrades ändert sich die Strömungsrichtung im Umfangsbereich des Laufrades und bewegt die Klappe zwischen zwei Schaltstellungen. Über eine Kopplung bewegt diese Klappe ein Ventilelement, welches zwischen zwei Ventilsitzen bewegt werden kann, wobei ein Ventilsitz an einem ersten und ein zweiter Ventilsitz an einem zweiten Einlasskanal gelegen ist. So ist es möglich, einlassseitig des Pumpenaggregates zwischen zwei Strömungswegen umzuschalten. Nachteilig bei dieser Ausgestaltung ist, dass von der Strömung auf die Klappe relativ große Kräfte ausgeübt werden müssen, um das Ventil in seiner jeweiligen Schaltstellung zu halten.

EP 0 394 140 A1 offenbart ein Umwälzpumpenaggregat mit einem in zwei Drehrichtungen antreibbaren Laufrad, wobei das Umwälzpumpenaggregat zwei saugseitige Eingänge mit einem zwischen diesem liegenden Ventilelement aufweist. Das Ventilelement ist über die Strömung im Umfangsbereich des Laufrades bewegbar, sodass abhängig von der Drehrichtung einer der Eingänge verschlossen und der andere geöffnet wird. Dies hat den Nachteil, dass ein in der Strömung gelegenes Antriebselement für das Ventilelement erforderlich ist, sodass ein zusätzlicher Strömungswiderstand in dem Pumpenaggregat und den damit verbundenen Wirkungsgradverlusten gegeben ist.

Es ist Aufgabe der Erfindung, ein Pumpenaggregat mit einem integrierten Ventil dahingehend zu verbessern, dass die Wirkungsgradverluste durch den Ventilantrieb verringert werden können.

Diese Aufgabe wird gelöst durch ein Pumpenaggregat mit den in Anspruch 1 angegebenen Merkmalen sowie durch ein hydraulisches System mit den in Anspruch 14 angegebenen Merkmalen. Bevorzugte Ausführunsformen ergeben sich aus den Unteransprüchen, der nachfolgenden Beschreibung sowie den beigefügten Figuren.

Das Pumpenaggregat ist als Kreiselpumpenaggregat ausgebildet und weist ein Laufrad auf, welches mit einem elektrischen Antriebsmotor verbunden ist, welcher in zwei Drehrichtungen antreibbar ist und somit das Laufrad in zwei Drehrichtungen drehen kann. Der Antriebsmotor weist dazu eine geeignete Steuereinrichtung auf, welche den Antriebsmotor so ansteuert, dass die gewünschte Drehrichtung ausgewählt werden kann. Das Pumpenaggregat weist darüber hinaus ein Ventil im Einlasskanal auf, welches durch die Strömung, welche von dem Laufrad erzeugt wird, betätigt bzw. geschaltet wird. Das Ventil ist vorzugsweise direkt an dem Pumpengehäuse angeordnet, wobei ein Ventilelement des Ventils und die zugehörigen Ventilsitze vorzugsweise in einem Ventilraum bzw. Ventilgehäuse angeordnet sind, welches von dem Innenraum des Pumpengehäuses, in welchem das Laufrad rotiert, getrennt ist. Das Ventilgehäuse kann jedoch vorzugsweise einstückig mit dem Pumpengehäuse beispielsweise als Gussteil, insbesondere als Spritzgussteil aus Kunststoff ausgebildet sein.

Das Ventil ist im Einlass des Pumpenaggregates gelegen, d. h. an der Saugseite des Pumpenaggregates. Das Ventil weist zumindest ein Ventilelement auf, welches zwischen zumindest zwei Schaltstellungen bewegbar ist. Dabei kommt das Ventilelement vorzugsweise in zumindest einer der Schaltstellungen an einem Ventilsitz dichtend zur Anlage. Besonders bevorzugt kann das Ventilelement an zwei Ventilsitzen wahlweise dichtend zur Anlage gebracht werden. Die Bewegung des Ventilelementes erfolgt durch die von dem Laufrad erzeugte Strömung. Dazu ist ein Antriebselement vorhanden, auf welches die von dem Laufrad erzeugte Strömung im Inneren des Pumpengehäuses wirkt. Abhängig von der von dem Antriebsmotor verursachten Drehrichtung des Laufrades ändert sich die Strömung im Inneren des Pumpengehäuses, so dass das Antriebselement in Abhängigkeit der Drehrichtung des Laufrades bewegt wird. Das Antriebselement ist mit dem Ventilelement kraftübertragend verbunden bzw. gekoppelt, so dass das Ventilelement von dem Antriebselement bewegt wird. So wird das Ventilelement über das Antriebselement in Abhängigkeit der Drehrichtung des Laufrades bewegt. Da das Ventil auf der Einlassseite liegt und das Antriebselement von der ausgangsseitigen Strömung des Laufrades betätigt werden soll, sind die Räume, in denen das Ventilelement und das Antriebselement gelegen sind, voneinander getrennt, da zwischen Ihnen im Betrieb des Pumpenaggregates eine Druckdifferenz besteht. Das Antriebselement liegt auf der Druckseite, während das Ventilelement auf der Saugseite des Laufrades gelegen ist. Die Verbindung zwischen Antriebselement und Ventilelement wird somit vorzugsweise in einer beweglichen Dichtung durch eine Wandung, welche die beiden Räume voneinander trennt, geführt. Alternativ ist jedoch beispielsweise auch eine magnetische Kupplung durch eine geschlossene Wand hindurch möglich.

Erfindungsgemäß ist das Ventilelement so angeordnet, dass es selbsttätig in zumindest einer der beiden Schaltstellungen durch den hydraulischen Druck, welcher von dem Pumpenaggregat erzeugt wird, gehalten werden kann. Das Ventilelement ist dazu derart angeordnet, dass es in zumindest einer ersten der beiden Schaltstellungen einen Einlasskanal des Pumpenaggregates verschließt, wobei die Bewegungsrichtung in diese erste Schaltstellung der Strömungsrichtung durch diesen Einlasskanal entspricht. Das bedeutet, dass das Ventilelement zum Schließen des Einlasskanals nicht gegen die Strömung in dem Einlasskanal bewegt wird, so dass geringere Betätigungskräfte erforderlich sind. Ferner wirkt die in dem Einlasskanal herrschende Strömung bzw. ein in dem Einlasskanal herrschender Druck auf das Ventilelement so, dass es in die geschlossene Schaltstellung gedrückt wird, insbesondere gegen einen Ventilsitz gedrückt wird. So wird das Ventil durch den Druck im Einlasskanal in der geschlossenen Schaltstellung gehalten. D. h. es wird eine Selbsthaltefunktion geschaffen und die von dem Antriebselement aufzubringenden Kräfte, können reduziert werden. Dies hat ebenfalls Vorteile im Hinblick auf die erforderlichen Hebelverhältnisse zwischen Antriebselement und Ventilelement.

Der Antriebsmotor ist vorzugsweise ein elektronisch gesteuerter bzw. geregelter Antriebsmotor, welcher in seiner Drehzahl veränderbar ist. So ermöglicht es der elektrische Antriebsmotor vorzugsweise insbesondere, mit unterschiedlichen Beschleunigungen das Laufrad anzutreiben. Es ist auch möglich, das Laufrad in den beiden Drehrichtungen mit unterschiedlichen Geschwindigkeiten und/oder Beschleunigungen anzutreiben. Dadurch ist es möglich beim Anfahren das Laufrad so zu beschleunigen, dass eine auf das Antriebselement wirkende Strömung, welche das Bewegen des Ventilelementes veranlasst, schneller aufgebaut wird, als ein Druck, welcher die Selbsthaltefunktion des Ventilelementes bewirkt.

Bevorzug ist das Pumpenaggregat als Umwälzpumpenaggregat, insbesondere als Heizungsumwälzpumpenaggregat ausgebildet. Ein solches Umwälzpumpenaggregat kann bevorzugt einen nasslaufenden elektrischen Antriebsmotor aufweisen. Das Umwälzpumpenaggregat fördert Flüssigkeit, insbesondere Wasser in einem Kreislauf, wobei aus dem Pumpenaggregat die Flüssigkeit druckseitig durch einen Auslass in ein hydraulisches System hinein austritt und von dem hydraulischen System im Kreis zu dem Einlasskanal des Pumpenaggregates, d. h. zu der Saugseite gefördert wird. Ist der Einlasskanal durch das Ventilelement verschlossen, wirkt so über den angeschlossenen hydraulischen Kreis ein von dem Pumpenaggregat erzeugter Druck auch im Einlasskanal auf das Ventilelement und kann dies so in seiner geschlossenen Schaltstellung halten.

Erfindungsgemäß weist das Pumpenaggregat zwei Einlasskanäle auf und das Ventil ist als Umschaltventil zwischen den beiden Einlasskanälen ausgebildet. Die beiden Einlasskanäle sind an der Saugseite des Pumpenaggregates angeordnet, d. h. das Laufrad saugt Flüssigkeit bzw. Wasser aus den Einlasskanälen an. Ein solches Pumpenaggregat kann in einem hydraulischen System angeordnet werden, in welchem ein hydraulischer Kreis zwei Teilkreise bzw. zwei Zweige aufweist, welche an der Druckseite des Pumpenaggregates voneinander abzweigen und jeweils in einen der beiden Einlasskanäle münden. So kann das Umschaltventil die von dem Laufrad erzeugte Strömung je nach Schaltstellung durch einen der Zweige des hydraulischen Kreises lenken. Eine solche Anordnung kann beispielsweise in einer Heizungsanlage zum Einsatz kommen, welche sowohl zur Erwärmung eines Gebäudes als auch zur Erwärmung von Brauchwasser genutzt wird. In einer solchen Anlage kann ein Zweig des hydraulischen Kreises als Heizkreislauf ausgebildet sein, welcher durch ein Gebäude bzw. die in dem Gebäude angeordneten Heizkörper oder Heizkreise geführt ist. Der andere Zweig stellt dann einen Zweig dar, welcher durch einen Wärmetauscher zum Erwärmen von Brauchwasser geleitet wird. Über das Ventil kann zwischen diesen beiden Kreisen bzw. zwei Zweigen umgeschaltet werden und es kann so wahlweise das Gebäude beheizt oder Brauchwasser erwärmt werden. Da das Ventil in dem Pumpenaggregat von dem Pumpenaggregat durch Wechsel der Drehrichtung umgeschaltet wird, kann so auf einen separaten Antrieb für das Umschaltventil verzichtet werden. In der einen Drehrichtung schaltet das Ventil so, dass das Wasser durch den Heizkreis geleitet wird. In der anderen Drehrichtung schaltet das Ventil in die zweite Schaltstellung, in welcher das Wasser durch den Wärmetauscher zur Brauchwassererwärmung gelenkt wird.

Das Ventil ist auch als Umschaltventil vorzugsweise so ausgebildet, dass es in jeder Schaltstellung durch den hydraulischen Druck selbsttätig gehalten wird. Vorzugsweise verschließt das zumindest eine Ventilelement in einer ersten Schaltstellung einen ersten Einlasskanal und in der zweiten Schaltstellung einen zweiten Einlasskanal, wobei das zumindest eine Ventilelement so angeordnet ist, dass seine Bewegungsrichtung in die erste Schaltstellung der Strömungsrichtung durch den ersten Einlasskanal und seine Bewegungsrichtung in die zweite Schaltstellung der Strömungsrichtung durch den zweiten Einlasskanal entspricht. So wird erreicht, dass beim Verschließen jedes Einlasskanals das Ventil stets mit der Strömung bzw. in Strömungsrichtung bewegt wird, so dass es nicht gegen die Strömung oder einen Druck in dem Einlasskanal bewegt werden muss. Ferner wirkt der Druck in dem jeweiligen Einlasskanal so, dass das Ventil in seiner geschlossenen Schaltstellung durch den Druck gehalten werden kann, insbesondere das Ventilelement gegen einen zugehörigen Ventilsitz gedrückt wird. Wenn die zwei Kreise des hydraulischen Systems in der zuvor beschriebenen Weise an der Druckseite des Pumpenaggregates voneinander abzweigen und jeder Kreis bzw. Zweig in einen der Einlasskanäle mündet, wird der hydraulische Druck von der Ausgangsseite des Pumpenaggregates auch in den gerade geschlossenen Kreis übertragen und wirkt dort dann in dem zughörigen Einlasskanal in Strömungsrichtung auf das dort angeordnete Ventilelement, so dass dieses durch den Druck in seine geschlossene Schaltstellung gedrückt wird bzw. in seiner geschlossenen Schaltstellung gehalten wird. Dies hat den Vorteil, dass das Antriebselement entlastet wird und die erforderlichen Haltekräfte nicht durch das Antriebselement und die von dem Laufrad erzeugten Strömung aufgebracht werden müssen.

Gemäß einer weiteren bevorzugten Ausführungsform weist das Ventilelement zwei Dichtflächen auf und das Ventil weist zwei zugehörige Ventilsitze auf, von denen ein erster Ventilsitz in dem ersten Einlasskanal und ein zweiter Ventilsitz in dem zweiten Einlasskanal gelegen ist, wobei die beiden Ventilsitze vorzugsweise einander abgewandt sind. Die einander abgewandte Ausrichtung der Ventilsitze bedeutet vorzugsweise, dass die Ventilsitze in entgegengesetzter Richtungen gerichtet sind, und insbesondere die Schließrichtungen der Ventilelemente bzw. des Ventilelementes an den beiden Ventilsitzen einander entgegengesetzt gerichtet sind. Es ist jedoch auch eine Anordnung im Winkel von < 180° möglich. Das Ventilelement ist mit seinen zwei Dichtflächen vorzugsweise so ausgebildet, dass wenn eine erste Dichtfläche an dem ersten Ventilsitz dichtend anliegt, gleichzeitig die zweite Dichtfläche von dem zweiten Ventilsitz abgehoben ist und dieser somit geöffnet ist. Dichtflächen und Ventilsitze sind vorzugsweise darüber hinaus so ausgebildet, dass der im jeweiligen Einlasskanal herrschende Druck die Dichtflächen gegen den zugehörigen Dichtsitz drückt, wenn die Dichtfläche an dem Ventilsitz in Anlage ist.

Gemäß einer weiteren bevorzugten Ausführungsform ist zumindest eine Dichtfläche des Ventilelementes und/oder ein Ventilsitz, an welchem das Ventilelement bzw. dessen Dichtfläche zur Anlage kommt, derart ausgestaltet, dass das Ventilelement sich in der Bewegungsrichtung nach Anlage an dem Ventilsitz um ein bestimmtes Maß weiterbewegen kann. Dies kann beispielsweise dadurch erreicht werden, dass das Ventilelement zumindest im Bereich der Dichtfläche und/oder der Ventilsitz elastisch verformbar sind. So kann eine bessere Abdichtung erreicht werden.

Besonders bevorzugt ist das Ventilelement mit dem Antriebselement derart verbunden, dass das Antriebselement durch Bewegung des Ventilelementes bewegbar ist. D. h. die Kopplung zwischen Ventilelement und Antriebselement ist so, dass nicht nur das Antriebselement als antreibendes Element das Ventilelement bewegen kann, sondern das umgekehrt auch das Ventilelement als antreibendes Element das Antriebselement bewegen kann. Wenn ein Rückstellelement wie eine Rückstellfeder an den Ventilelement angreift, um dies beispielsweise bei Stillstand des Pumpenaggregates in eine Ruhelage zu bewegen, so kann auf diese Weise gleichzeitig auch das Antriebselement in eine vorgegebene Ruhelage bewegt werden. Darüber hinaus hat diese Anordnung den Vorteil, dass, wenn wie vorangehend beschrieben, durch Druckbeaufschlagung des Ventilelementes dieses nach Erreichen der Schließstellung noch um ein gewisses Maß weiterbewegt wird, diese Weiterbewegung ebenfalls auf das Antriebselement übertragen wird. So kann das Antriebselement dann aktiv durch die von dem Ventilelement verursachte Bewegung aus dem Strömungsweg bewegt werden, um den Strömungswiderstand zu minimieren.

Erfindungsggemäß ist das Ventilelement zwischen den beiden Schaltstellungen linear bewegbar. Das Umschaltventil trägt vorzugsweise zwei Dichtflächen, von welchen jeweils eine mit einem Ventilsitz zur Anlage bringbar ist. Es ist jedoch auch bei einem Umschaltventil denkbar, zwei getrennte Ventilelemente zu verwenden, welche auf geeignete Weise in ihrer Bewegung miteinander gekoppelt sind. Bei dem inearbeweglichen Umschaltventil sind die Ventilsitze bevorzugt diametral entgegengesetzt gerichtet und voneinander abgewandt. Die Verbindung der beiden Dichtflächen erstreckt sich somit durch die Ventilsitze bzw. deren Öffnungen hindurch.

Erfindungsgemäß weist das Antriebselement eine Anströmfläche auf, welche in einem Auslasskanal eines das Laufrad umgebenden Pumpengehäuses gelegen ist. Dabei ist das Anströmelement bzw. die Anströmfläche des Antriebselementes vorzugsweise so gelegen, dass sie außerhalb eines das Laufrad in dem Pumpengehäuse umgebenden Ringraumes gelegen ist. D. h. bevorzugt ist in radialer Richtung zwischen dem Antriebselement bzw. dessen Anströmfläche und dem Außenumfang des Laufrades ein Abstand gegeben, so dass eine Strömung zwischen dem Antriebselement und dem Außenumfang des Laufrades hindurch verlaufen kann. Die Anordnung der Anströmfläche im Auslasskanal hat den Vorteil, dass die Strömung, welche von dem Laufrad erzeugt wird, über den Auslasskanal gezielt an bzw. auf die Anströmfläche gelenkt werden kann, um an dem Antriebselement eine Kraft zu dessen Bewegung und darüber die Bewegung des Ventilelementes zu veranlassen.

Erfindungsgemäß wird die Anströmfläche von einer um eine Schwenkachse schwenkbaren Klappe gebildet und die Klappe ist mit dem Ventilelement zu dessen Bewegung z.B. über ein Verbindungselement gekoppelt. Das Verbindungselement ist vorzugsweise durch eine Trennwand zwischen dem Ventilraum, in welchem das Ventil angeordnet ist und dem Inneren des Pumpengehäuses hindurchgeführt. Diese Trennwand trennt Druck- und Saugseiten bzw. Auslass und Einlass des Pumpenaggregates voneinander. Die schwenkbare Klappe kann insbesondere im Auslass des Pumpenaggregates so angeordnet sein, dass sie je nach Drehrichtung des Laufrades an unterschiedlichen Seiten von der Strömung beaufschlagt wird, so dass sie abhängig von der Drehrichtung in eine Richtung oder in die entgegengesetzte andere Richtung verschwenkt. Das Verbindungselement zwischen der Klappe und dem Ventilelement kann durch eine Trennwand zwischen Pumpenraum und Ventilraum entweder so hindurchgeführt sein, dass sich die Dreh- bzw. Schwenkachse quer zu der Trennwand erstreckt oder parallel zu dieser Trennwand gelegen ist. Erstreckt sich die Schwenk- bzw. Drehachse quer zu der Wand, ist eine dynamische Dichtung im Bereich der Durchführung, beispielsweise eine Wellendichtung bevorzugt. Erstreckt sich die Schwenk- bzw. Drehachse parallel zu der Wandung, kann ein Verbindungselement so durch die Wandung hindurchgeführt werden, dass zur Abdichtung ein elastisches Element, wie eine Gummi- oder eine Elastomer-Manschette verwendet werden kann.

Bevorzugt ist die Klappe in einem Auslasskanal des Pumpengehäuses derart angeordnet, dass bei einer ersten Drehrichtung des Antriebsmotors die Klappe von der von dem Laufrad erzeugten Strömung an einer ersten Oberfläche beaufschlagt wird und bei einer zweiten entgegengesetzten Drehrichtung des Antriebsmotors an einer zweiten von der ersten Oberfläche abgewandten Oberfläche beaufschlagt wird. Der Auslasskanal ist bevorzugt so ausgebildet, dass er sich zum Inneren des Pumpengehäuses hin, d. h. dem Laufrad zugewandt erweitert, so dass die in Umfangsrichtung bzw. in tangentialer Richtung gerichteten Strömungen möglichst ungehindert in den Auslasskanal eintreten können. Da dies für beide Drehrichtungen gelten soll, ist der Auslasskanal vorzugsweise derart symmetrisch ausgebildet, dass die Strömungsführung in beiden Drehrichtungen bzw. Strömungsrichtungen gleich gut wirkt.

Weiter bevorzugt erstreckt sich die Schwenkachse der Klappe parallel zu der Drehachse des Laufrades. Das bedeutet, die Schwenkbewegung der Klappe bzw. die Schwenkrichtung liegt in einer Ebene quer zur Drehachse des Laufrades. Das bedeutet, dass die Klappe sehr gut in zwei verschiedenen Richtungen angeströmt werden kann, je nachdem, in welche Drehrichtung sich das Laufrad dreht. Es ist zu verstehen, dass die Klappe so ausgebildet sein kann, dass sie drehbar gelagert ist. Alternativ oder zusätzlich kann die Klappe auch biegbar, insbesondere elastisch biegbar ausgebildet sein. In diesem Sinne wird auch ein Biegebereich bzw. eine Biegeachse als Schwenkachse verstanden. Es ist jedoch auf jeden Fall erforderlich, durch geeignete Übertragungsmittel die Schwenkbewegung der Klappe auf das Ventilelement zu dessen Bewegung zu übertragen, damit die Klappe als Antriebselement fungieren kann.

Gemäß einer besonderen Ausführungsform der Erfindung weist das Pumpengehäuse zwei Auslasskanalabschnitte auf, welche zu dem Laufrad derart gerichtet sind, dass bei einer ersten Drehrichtung des Antriebsmotors die von dem Laufrad erzeugte Strömung im Wesentlichen in einen ersten Auslasskanalabschnitt und bei einer zweiten entgegengesetzten Drehrichtung des Antriebsmotors die von dem Laufrad erzeugte Strömung im Wesentlichen in einen zweiten Auslasskanalabschnitt gelenkt wird, wobei die schwenkbare Klappe bevorzugt in dem ersten oder in dem zweiten Auslasskanalabschnitt angeordnet ist. Dies bedeutet, dass der andere Auslasskanalabschnitt vorzugsweise jeweils frei von einer Klappe ist, so dass die Strömung durch diesen Auslasskanal möglichst wenig behindert wird. Die Klappe ist vorzugsweise in demjenigen Auslasskanalabschnitt angeordnet, welcher bei der weniger genutzten Drehrichtung des Laufrades bzw. Antriebsmotors vorrangig durchströmt wird. Im Falle eines Heizungsumwälzpumpenaggregates, wie es oben beschrieben wurde, ist dies vorzugsweise die Drehrichtung, welche genutzt wird, um das Heizwasser durch einen Wärmetauscher zur Brauchwassererwärmung zu lenken. Die Auslasskanalabschnitte sind vorzugsweise so ausgebildet, dass eine in Umfangsrichtung verlaufende Strömung, welche entlang der Innenumfangswandung des Pumpengehäuses verläuft, je nach Strömungsrichtung bevorzugt in jeweils einen Auslasskanalabschnitt eintritt. Die Auslasskanalabschnitte zweigen daher vorzugsweise an der Innenumfangswandung des Pumpengehäuses im Umfangsbereich des Laufrades radial nach außen ab. Dabei erstrecken sich die Auslasskanalabschnitte vorzugsweise gekrümmt, um eine Umlenkung der Strömung aus der Umfangsrichtung in die radiale Richtung zu ermöglichen. Beide Auslasskanalabschnitte münden dann weiter stromabwärts vorzugsweise in einen gemeinsamen Auslasskanal bzw. Auslassstutzen des Pumpenaggregates.

Gemäß einer bevorzugten Ausführungsform können beide Auslasskanalabschnitte durch eine Trennwand oder ein Trennelement voneinander getrennt sein. Diese Trennwand bzw. dieses Trennelement liegt dabei am stromaufwärtigen Ende der Auslasskanalabschnitte. Weiter stromabwärts hört die Trennung der Auslasskanalabschnitte vorzugsweise auf, so dass diese sich zu einem gemeinsamen Auslasskanal vereinigen. Eine solche Trennwand bzw. ein Trennelement verbessert die Strömungsführung im Übergangsbereich zwischen dem das Laufrad umgebenden Innenraum des Pumpengehäuses und dem Auslasskanal.

Gemäß einer weiteren bevorzugten Ausführungsform haben das Ventilelement und das Antriebselement eine definierte Ruhelage bzw. einen definierten Ruhebereich, wobei vorzugsweise Rückstellmittel vorhanden sind, welche das Antriebselement und/oder das Ventilelement mit einer in die Ruhelage gerichteten Kraft beaufschlagen. Im Betrieb des Pumpenaggregates wird diese Kraft vorzugsweise durch die erzeugte Strömungskraft überwunden, so dass das Ventilelement aus seiner Ruhelage in eine oder mehrere mögliche Schaltstellungen bewegt werden kann. Wird das Pumpenaggregat abgeschaltet oder die Drehzahl unter eine bestimmte Grenze reduziert, lässt die Strömungskraft nach und die von dem Rückstellmittel erzeugte Kraft bewegt das Ventilelement und/oder das Antriebselement wieder in die Ruhelage zurück. Das Rückstellmittel kann beispielsweise ein Federelement sein. Alternativ oder zusätzlich können das Antriebselement und/oder das Ventilelement elastisch verformt werden, so dass elastische Rückstellkräfte das Ventilelement und/oder das Antriebselement wieder zurück in die Ruhelage bewegen. In diesem Fall wird das Rückstellmittel somit durch die Elastizität des Antriebselementes und/oder des Ventilelementes gebildet.

Das Laufrad ist vorzugsweise in einem Pumpengehäuse angeordnet, während das Ventilelement in einem Ventilgehäuse angeordnet ist. Das Pumpengehäuse definiert den Pumpenraum bzw. Druckraum, in welchem das Laufrad rotiert und das Ventilgehäuse definiert den Ventilraum, in dem das Ventilelement gelegen ist. Der Ventilraum liegt im Einlass des Pumpenaggregates, so dass dort der saugseitige Druck herrscht. Das Antriebselement ist in dem Pumpengehäuse angeordnet, während das Ventilelement in dem Ventilgehäuse angeordnet ist. Zwischen beiden ist ein Kraftübertragungselement angeordnet, welches das Antriebselement und das Ventilelement miteinander koppelt. Dies kann, wie oben beschrieben, ein Verbindungselement sein, welches durch eine Wandung zwischen dem Pumpengehäuse und dem Ventilgehäuse hindurchgeführt ist. Alternativ kann dies auch ein magnetisches Kraftübertragungselement sein.

Gemäß einer besonders bevorzugten Ausführungsform der Erfindung ist das Laufrad im Verhältnis zu der das Laufrad umgebenden Innenumfangswandung eines Pumpengehäuses, in welchem das Laufrad rotiert, so dimensioniert, dass zwischen dem Außenumfang des Laufrades und dem Innenumfang des umgebenden Pumpengehäuses ein Freiraum, insbesondere ein freier Ringraum, welcher das Laufrad umgibt, geschaffen wird. Dabei ist dieser Freiraum vorzugsweise größer als üblich ausgebildet. Vorzugsweise ist der Innenradius des Pumpengehäuses im Umfangsbereich des Laufrades mindestens 1,4 mal, weiter bevorzugt 1,5 mal und noch weiter bevorzugt mindestens 2 mal so groß wie der Radius des Laufrades. Besonders bevorzugt ist der Innenradius des Pumpengehäuses zwischen 1,5 und 3,5 und weiter bevorzugt zwischen 1,75- bis 2,25-mal so groß wie der Radius des Laufrades. Der Radius des Pumpengehäuses definiert dabei den Abstand zwischen Innenumfangswandung des Pumpengehäuses und der Drehachse des Laufrades. Der Innenumfang des Pumpengehäuses muss nicht kreisförmig sein, sondern kann in seinem Abstand zur Drehachse (Radius) über den Umfang variieren. Das genannte Radiusverhältnis ist besonders bevorzugt im vollständigen Umfang des Laufrades, d. h. in einem Umfangsbereich von 360° bezogen auf die Drehachse des Laufrades gegeben. Alternativ kann auch nur in einem Umfangsabschnitt < 360° ein derartiges Radiusverhältnis gegeben sein, so dass ein Freiraum zwischen Außenumfang des Laufrades und Innenumfang des Pumpengehäuses gegeben ist. Dies kann beispielsweise ein Umfangsabschnitt < 180°, weiter bevorzugte < 90° und weiter bevorzugt < 45° sein. Besonders bevorzugt grenzt dieser Umfangsabschnitt mit dem vergrößerten Freiraum zwischen Laufrad und Pumpengehäuse an einen Auslass des Pumpengehäuses an. Der Freiraum begünstigt die Strömung, so dass insbesondere in beiden Drehrichtungen ein hoher Wirkungsgrad erreicht werden kann, selbst wenn das Laufrad für eine Drehrichtung optimiert ist. Besonders bevorzugt ist im gesamten Umfangsbereich ein derartiger Abstand zwischen Laufrad und Pumpengehäuse gegeben, dass sich bei Betrieb des Pumpenaggregates im Umfang des Laufrades ein rotierender Flüssigkeits- bzw. Wasserring ausbilden kann, welcher die Umwandlung von Strömungsenergie in Druck verbessert und bevorzugt wie eine weitere Pumpenstufe wirkt. Darin unterscheidet sich diese bevorzugte Ausführungsform von konventionellen Kreiselpumpenaggregaten, in welchen gerade eine Rotation der Flüssigkeit über den Auslass hinaus verhindert werden soll.

Gemäß einer bevorzugten Ausführungsform der Erfindung weist das Laufrad gekrümmte, vorzugsweise in zwei Richtungen gekrümmte Schaufeln auf, wobei die Schaufeln vorzugsweise eine Krümmung aufweisen, welche derjenigen Drehrichtung, in welcher das Laufrad überwiegend betrieben wird, angepasst ist. Die Drehrichtung, in welcher das Laufrad überwiegend betrieben wird, ist diejenige Drehrichtung, in welcher das Pumpenaggregat die meisten Betriebsstunden aufweist. Im Falle der Verwendung des Pumpenaggregates in einer Heizungsanlage, wie sie oben beschrieben wurde, ist dies vorzugsweise diejenige Drehrichtung, in welcher das Pumpenaggregat Heizwasser durch den Heizkreislauf eines Gebäudes führt. Die gekrümmte Ausgestaltung der Schaufeln ermöglicht es, den Wirkungsgrad des Laufrades für die überwiegende Betriebszeit zu optimieren. In umgekehrter Drehrichtung, welche weniger genutzt wird, kann der Wirkungsgrad schlechter sein. Insbesondere durch den Freiraum zwischen Außenumfang des Laufrades und Innenumfang des Pumpengehäuses kann dies jedoch zu einem gewissen Maße kompensiert werden, dass selbst bei gekrümmten Schaufeln in rückwärtsgewandter Drehrichtung, d. h. entgegen der Krümmung der Schaufeln noch ein akzeptabler Wirkungsgrad erreicht werden kann. Dies gilt insbesondere, wenn das Pumpenaggregat im Teillastbereich, d. h. bei relativ hohem Anlagewiderstand, betrieben wird. Die Schaufeln sind insbesondere in Umfangsrichtung gekrümmt, können jedoch zusätzlich in axialer Richtung, d. h. in Richtung parallel zur Drehachse gekrümmt sein. Durch die Krümmung der Schaufeln wird die Strömungsführung verbessert.

Das Laufrad weist weiter bevorzugt einen Durchmesser zwischen 25 und 60 mm auf, wobei vorzugsweise der Einlauf-Durchmesser bzw. Saugmund-Durchmesser zwischen 12 und 30 mm Durchmesser liegt. Die Betriebsdrehzahl des Antriebsmotors ist vorzugsweise > 3.000 Umdrehungen pro Minute, weiter bevorzugt > 5.000 Umdrehungen pro Minute. Besonders bevorzugt liegt die Betriebsdrehzahl im Bereich zwischen 3.000 und 7.000 Umdrehungen pro Minute und kann in diesen Drehzahlbereich zur Regelung des Pumpenaggregates variiert werden. Das Druck-Mengen-Verhältnis des Pumpenaggregates liegt vorzugsweise oberhalb von 3/1, weiter bevorzugt 4/1. Das Druck-Mengen-Verhältnis kann auch > 5/1, bis zu 8/1 betragen. Bei dem Druck-Mengen-Verhältnis ist der Druck als Förderhöhe in Metern und die Menge als Durchfluss in Kubikmetern pro Stunde zugrundegelegt. Die spezifischen Drehzahl n_{q} liegt vorzugsweise zwischen 20 und 40, kann aber auch größer sein.

Gegenstand der Erfindung ist neben dem vorangehend beschriebenen Pumpenaggregat ferner ein hydraulisches System mit zumindest zwei hydraulischen Kreisen, wobei ein Pumpenaggregat gemäß der vorangehenden Beschreibung in dem hydraulischen System angeordnet ist und das Ventil des Pumpenaggregates als Umschaltventil ausgebildet ist, mittels welchem der Strömungsweg für eine von dem Pumpenaggregat geförderte Flüssigkeit zwischen den beiden hydraulischen Kreisen umschaltbar ist. Wie beschrieben, liegt das Umschaltventil dabei an der Saugseite des Pumpenaggregates, d. h. im Einlasskanal des Pumpenaggregates, in welchem von dem Pumpenaggregat Flüssigkeit angesaugt wird. Die beiden hydraulischen Kreise zweigen ausgangsseitig von dem Pumpenaggregat, d. h. im Druckbereich, voneinander ab. Wie beschrieben handelt es sich bei dem hydraulischen System vorzugsweise um ein Heizungssystem, wobei ein hydraulischer Kreis durch ein Gebäude verläuft und der andere hydraulische Kreis der Kreislauf durch einen Wärmetauscher zum Erwärmen von Brauchwasser ist.

Nachfolgend wird die Erfindung beispielhaft anhand der beigefügten Figuren beschrieben. In diesen zeigt:
- Fig. 1: schematisch ein hydraulisches System gemäß der Erfindung mit einem ersten Einbauort des Pumpenaggregates,
- Fig. 2: eine teilweise geschnittene Ansicht eines Pumpenaggregates gemäß einer ersten Ausführungsform der Erfindung,
- Fig. 3: eine Schnittansicht des Pumpenaggregates gemäß Fig. 2 entlang der Linie III-III in Fig. 2, wobei sich ein Ventil in dem Pumpenaggregat in der Ruhelage befindet,
- Fig. 4: eine Schnittansicht gemäß Fig. 3, wobei sich das Ventil in einer ersten Schaltstellung befindet,
- Fig. 5: eine Schnittansicht gemäß Fig. 3 und 4, wobei sich das Ventil in einer zweiten Schaltstellung befindet,
- Fig. 6: eine Explosionsansicht des Pumpenaggregates gemäß Fig. 2 bis 5,
- Fig. 7: eine Schnittansicht eines Pumpenaggregates gemäß einer zweiten Ausführungsform der Erfindung,
- Fig. 8: eine Explosionsansicht des Pumpenaggregates gemäß Fig. 7,
- Fig. 9: eine Schnittansicht entlang der Linie IX-IX in Fig. 7, wobei sich das Antriebselement in der Ruhelage befindet,
- Fig. 10: eine Schnittansicht entlang der Linie X-X in Fig. 7, wobei sich das Ventilelement in einer Ruhelage befindet,
- Fig. 11: eine Ansicht gemäß Fig. 10, wobei sich das Ventilelement in einer ersten Schaltstellung befindet, und
- Fig. 12: eine Ansicht gemäß Fig. 10 und 11, wobei sich das Ventilelement in einer zweiten Schaltstellung befindet.

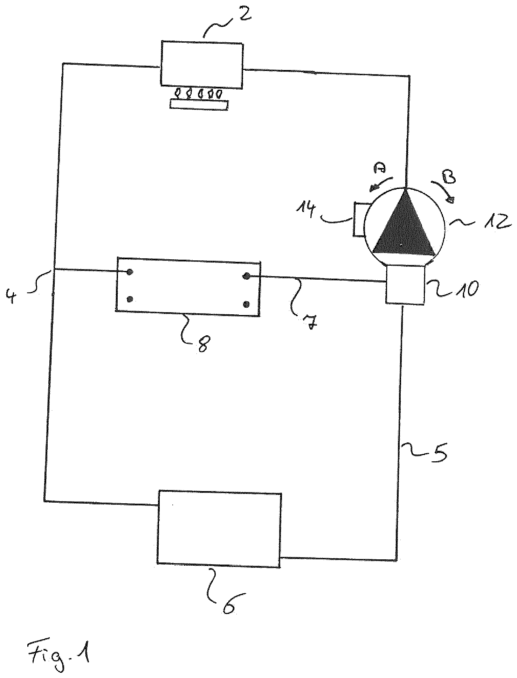

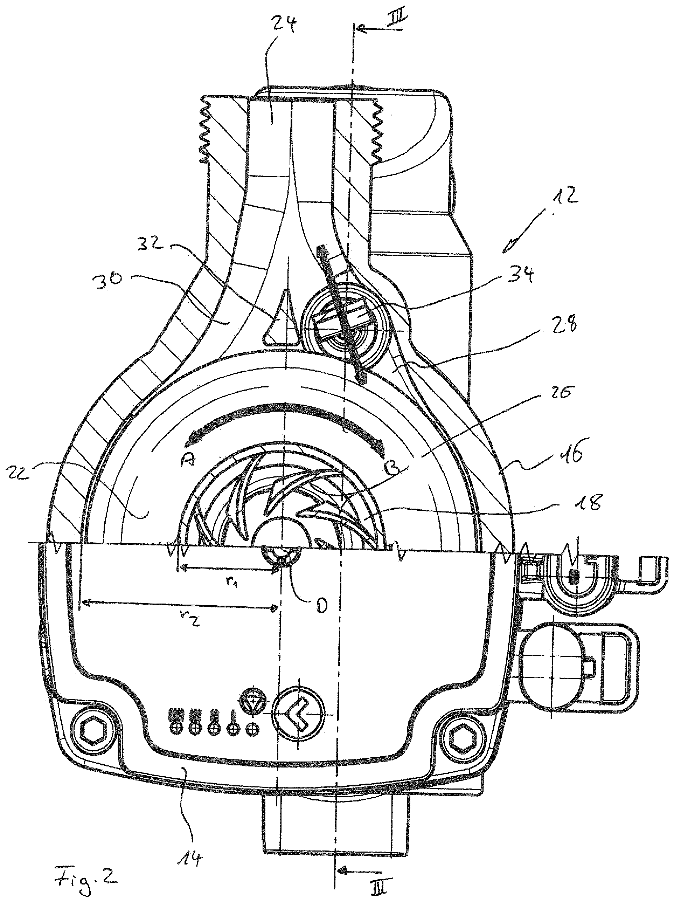

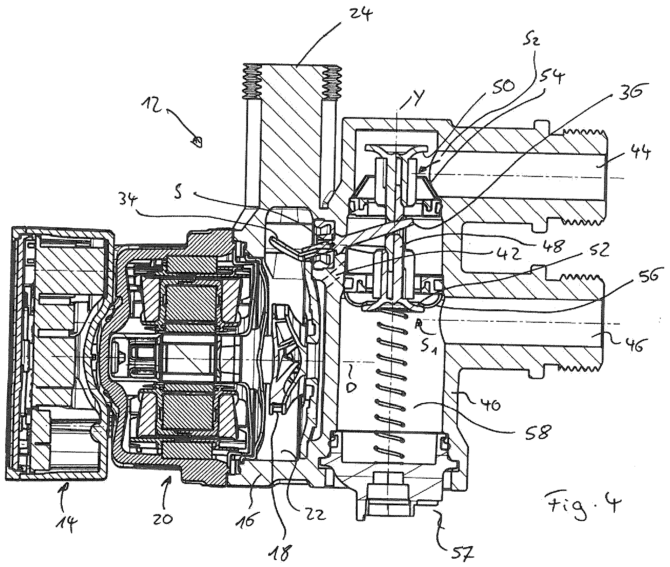

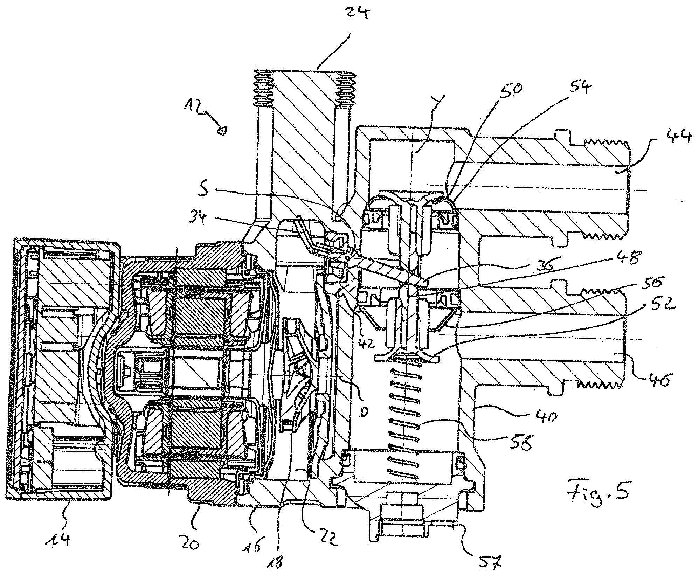

Fig. 1 zeigt ein hydraulisches System, in welchem ein Pumpenaggregat gemäß der Fig. 2 bis 12 zum Einsatz kommen kann. Bei diesem hydraulischen System handelt es sich um eine Heizungsanlage mit zwei hydraulischen Kreisen. Das hydraulische System weist einen Primärwärmetauscher 2 auf, welcher beispielsweise durch einen Brenner wie ein Gas- oder Ölbrenner beheizt wird. Bei dem Primärwärmetauscher 2 handelt es sich somit beispielsweise um einen Heizkessel, es kann sich jedoch auch um einen anderen geeigneten Wärmeerzeuger handeln. In Strömungsrichtung hinter dem Primärwärmetauscher 2 gelegen ist ein Abzweigpunkt 4, an welchem sich der Kreislauf in zwei Kreise aufteilt. Ein erster Kreis 5 verläuft durch ein Gebäude zur Raumheizung und ist in diesem Beispiel durch einen Heizkörper 6 symbolisiert. Es ist zu verstehen, dass dieser Heizkreis 5 mehr als einen Heizkörper 6 oder auch andere Heizleitungen aufweisen kann. Der zweite hydraulische Kreis 7 verläuft durch einen Sekundärwärmetauscher 8, welcher zur Erwärmung von Brauchwasser dient. Der Heizkreis 5 und der zweite Kreis 7 münden in ein Ventil 10, welches Teil des Pumpenaggregates 12 ist. Das Pumpenaggregat 12 dient dazu, Wasser durch die beiden Kreise 5 und 7 zu fördern, wobei je nach Schaltstellung des als Umschaltventil ausgebildeten Ventils 10 nur einer der Kreise 5 und 7 geöffnet ist, während der andere Kreis geschlossen ist. Das heißt bei Betrieb des Pumpenaggregates 12 wird das von dem Primärwärmetauscher 2 erwärmte Wasser je nach Ventilstellung entweder durch den Sekundärwärmetauscher 8 oder durch die Heizkörper 6 gefördert. Wesentlich ist, dass über den Abzweigpunkt 4 auch in dem jeweils von dem Ventil 10 verschlossenen Kreis der ausgangsseitige Druck des Pumpenaggregates 12 anliegt. Bei dem Pumpenaggregat 12 handelt es sich um ein Pumpenaggregat, welches über einen elektrischen Antriebsmotor in zwei Drehrichtungen betrieben werden kann. Die Drehrichtung wird von einer Steuereinrichtung 14, welche in das Pumpenaggregat 12 integriert ist, eingestellt. Die Steuereinrichtung 14 steuert den elektrischen Antriebsmotor an.

Anhand der Fig. 2 bis 6 wird ein erstes Ausführungsbeispiel für das Pumpenaggregat 12 mit dem Ventil 10 beschrieben. Fig. 2 zeigt das Pumpengehäuse 16 teilweise geschnitten. In dem nicht geschnittenen Bereich ist eine Draufsicht auf das Elektronikgehäuse, welches die Steuereinrichtung 14 beherbergt, zu sehen. Im Inneren des Pumpengehäuses 16 ist ein Laufrad 18 gelegen. Dieses wird von dem elektrischen Antriebsmotor 20 um die Drehachse D drehend angetrieben. Dabei kann das Laufrad wahlweise in den Drehrichtungen A und B angetrieben werden. Das Laufrad 18 hat einen Radius r₁, während der Innendurchmesser des Pumpengehäuses 16 im Umfangsbereich des Laufrades 18 einen Durchmesser r₂ hat. Es ist zu erkennen, dass der Innendurchmesser r₂ des Pumpengehäuses 16 deutlich größer als der Außendurchmesser r₁ des Laufrades ist. Im gezeigten Beispiel ist der Radius des Pumpengehäuses r₂ ungefähr doppelt so groß wie der Radius r₁ des Laufrades 18. Auf diese Weise wird ein Freiraum in Form eines Ringraumes 22 im Umfangsbereich des Laufrades 18 geschaffen, in welchem sich bei Rotation des Laufrades 18 ein rotierender Wasserring ausbildet, welcher sich während der Rotation in radialer Richtung vergrößert, bis die Strömung in den Auslasskanal 24 eintritt. Der rotierende Wasserring begünstigt dabei die Umsetzung von Strömungsenergie, das heißt Geschwindigkeit der aus dem Laufrad 18 austretenden Flüssigkeit in Druck.

Das Laufrad 18 weist gekrümmte Schaufeln 26 auf, welche sowohl in Richtung der Drehachse D als auch in Umfangsrichtung gekrümmt sind. In diesem Fall sind die Schaufeln 26 so gekrümmt, dass sie auf die Drehrichtung A hin optimiert sind. Das heißt das Laufrad wird bei Drehung in der Richtung A den optimalen Wirkungsgrad erzielen. Aufgrund des freien Ringraumes 22 erzielt das Laufrad aber auch in der Drehrichtung B, trotz der für diese Drehrichtung nicht richtig gekrümmten Schaufeln 26, einen akzeptablen Wirkungsgrad.

Der Auslasskanal 24 weist angrenzend an den Innenraum des Pumpengehäuses 16 zwei Auslasskanalabschnitte 28 und 30 auf. Die Auslasskanalabschnitte 28 und 30 sind durch ein im Querschnitt dreieckiges Trennelement 32 bzw. eine Trennwand 32 voneinander getrennt. Stromabwärts des Trennelementes 32 vereinigen sich die Auslasskanalabschnitte 28 und 30 zu dem Auslasskanal 24. Wenn das Laufrad 18 in der Drehrichtung A rotiert, wird die Flüssigkeit bzw. das Wasser im Außenumfangsbereich des Laufrades 18 in dem Ringraum 22 ebenfalls in der Richtung A rotieren und so in tangentialer Richtung in den Auslasskanalabschnitt 28 eintreten, während in den Auslasskanalabschnitt 30 deutlich weniger Wasser eintreten wird. Wird das Laufrad 18 in umgekehrter Drehrichtung B betrieben, rotiert auch die Flüssigkeit in dem Ringraum 22 in der Drehrichtung B, so dass die Flüssigkeit dann bevorzugt in den Auslasskanalabschnitt 30 eintritt.

In dem Auslasskanalabschnitt 28 ist ein Antriebselement in Form einer schwenkbaren Klappe 34 angeordnet. Die Klappe ist an einem Hebel 36 befestigt, welcher sich durch eine Dichtung 38 hindurch aus dem Inneren des Pumpengehäuses 16 hinaus in das Innere eines Ventilgehäuses 40 hinein erstreckt.

Das Ventilgehäuse 40 ist an der Saugseite des Pumpenaggregates 12 angeordnet und beherbergt das Ventil 10. Das Innere des Ventilgehäuses 40 ist über eine nur schematisch angedeutete Verbindung 42 mit einem Saugraum und damit dem Saugmund des Laufrades 18 in Verbindung. Das Ventilgehäuse 40 weist zwei Einlasskanäle 44 und 46 auf, wobei der Einlasskanal 44 mit dem Heizkreis 5 und der Einlasskanal 46 mit dem zweiten Kreis 7 durch den Sekundärwärmetauscher 8 verbunden wird.

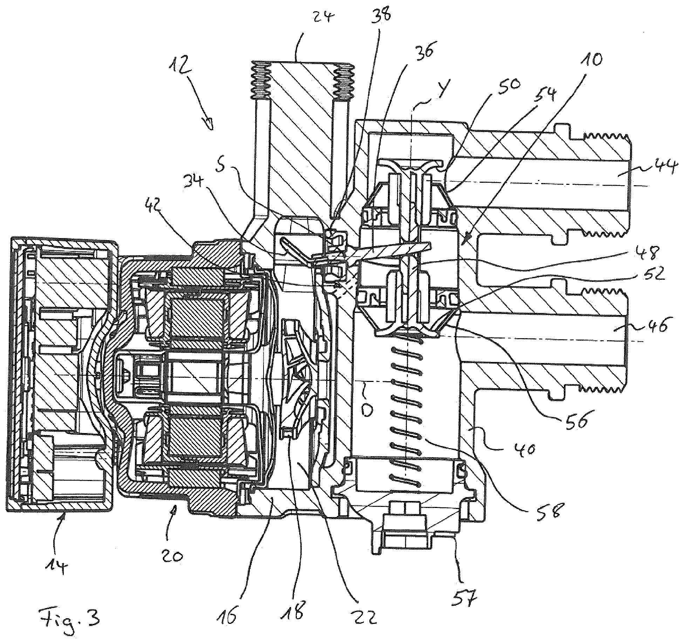

Das Ventil weist ein linear bewegliches Ventilelement 48 auf, wobei der Hebel 36 mit dem Ventilelement 48 so in Eingriff ist, dass durch eine Schwenkbewegung des Hebels 36 um eine Schwenkachse S das Ventilelement 48 entlang der Achse Y linear verschoben wird. Das Ventilelement 48 weist an seinen Axialenden zwei einander zugewandte Dichtflächen 50 und 52 auf. Den Dichtflächen 50 und 52 zugewandt sind Ventilsitze 54 und 56. Dabei mündet der erste Einlasskanal 44 an den ersten Ventilsitz 54 und der zweite Einlasskanal 46 an dem zweiten Ventilsitz 56. Die Dichtfläche 50 kann mit dem Ventilsitz 54 in dichtende Anlage treten, während die Dichtfläche 52 mit dem Ventilsitz 56 in dichtende Anlage treten kann, wie in Fig. 3 gezeigt ist. Die Dichtflächen 50, 52 sind über das Ventilelement 48 fest miteinander verbunden, so dass, wenn eine der Dichtflächen 50, 52 an ihrem zugehörigen Ventilsitz 54, 56 anliegt, die jeweils andere Dichtfläche 52, 50 von ihrem Ventilsitz 56, 54 abgehoben ist. So steht jeweils nur einer der Einlasskanäle 44 und 46 über die Verbindung 42 mit dem Saugmund des Laufrades 18 in fluidleitender Verbindung.

Fig. 3 zeigt die Ruhelage des Ventils 48, welche durch eine Rückstellfeder 58 gehalten wird. Diese Ruhelage ist die Position des Ventilelementes 58 bei Stillstand des Pumpenaggregates. In dieser Lage ist der zweite Kreis 7 durch den Sekundärwärmetauscher 8 geschlossen, da der Einlasskanal 46 geschlossen ist. Wird aus dieser Ruhelage heraus der Antriebsmotor 20 durch entsprechende Ansteuerung über die Steuereinrichtung 14 so in Betrieb genommen, dass das Laufrad 18 in der Drehrichtung B rotiert, wird die rotierende Strömung in dem Ringraum 22 in erster Linie in den Auslasskanalabschnitt 30 gelenkt, so dass auf die Klappe 34 nur eine geringe Strömungskraft wirkt, welche nicht ausreicht, dass die Klappe 34 den Hebel 36 verschwenkt, um das Ventilelement 48 zu bewegen. So wird das Wasser über den Auslasskanalabschnitt 30 in den Auslasskanal 34 gefördert und strömt durch den Heizkreis 5 in den Einlasskanal 34. Von dort strömt es durch den geöffneten Ventilsitz 54, über die Verbindung 42 in den Saugmund des Laufrades 18. Gleichzeitig wird der ausgangsseitige Druck des Pumpenaggregates 12 über den nun geschlossenen zweiten Kreis 7 auch in den Einlasskanal 46 übertragen. Dort wirkt der Druck auf die Stirnseite des Ventilelementes 48, das heißt die Rückseite der Dichtfläche 52. Da der Ventilsitz 56 elastisch ausgebildet ist, wird er dabei um ein gewisses Maß gegenüber der Ruhelage verformt, so dass sich das Ventilelement 48 noch um ein bestimmtes Maß verschieben kann. Der auf die Rückseite der Dichtfläche 52 durch den Einlasskanal 46 wirkende Druck hält während des Betriebs des Pumpenaggregates das Ventilelement 48 so sicher in der gezeigten ersten Schaltstellung, welche dazu dient, das Heizwasser durch den Heizkreis 5 zu leiten.

Dafür wesentlich ist, dass das Ventilelement so ausgebildet ist, dass es zum Schließen des Einlasskanales 46 in der Strömungsrichtung S₁ zu dem Dichtsitz 50 hin bewegt werden muss. Umgekehrt wird die Dichtfläche 50 in der Strömungsrichtung S₂ durch den Einlasskanal 44 zu dem Ventilsitz 54 hin bewegt, um den Ventilsitz 54 zu verschließen. Das Ventilelement 48 erstreckt sich durch die Ventilsitze 54 und 56 bzw. die in den von den Ventilsitzen 54 und 65 umschlossenen Öffnungen hindurch, so dass die Dichtflächen 50 und 52 einander zugewandt sind, während die Ventilsitze 54 und 56 einander abgewandt sind.

Wird der Antriebsmotor 20 in umgekehrter Drehrichtung A angetrieben, wird die Flüssigkeit im Inneren des Pumpengehäuses 16 in dem Ringraum 22 in eine Rotation in Richtung der Drehrichtung A versetzt. Die Flüssigkeit strömt so nun vorrangig in den Auslasskanalabschnitt 28 ein, während in den Auslasskanalabschnitt 30 weniger bzw. im Wesentlichen keine Strömung gelenkt wird. Dadurch wird die Klappe 34 an ihrer dem Laufrad 18 zugewandten Oberfläche, welche eine Anströmfläche bildet, mit der Strömung beaufschlagt, welche die Klappe 34 um die Schwenkachse S verschwenkt, woraufhin der Hebel 36 gleichzeitig das Ventilelement 48 entlang der Achse Y linear verschiebt, wobei die Dichtfläche 52 von dem Ventilsitz 56 außer Anlage tritt und so den ersten Einlasskanal 46 freigibt. In der Drehrichtung A wird der Antriebsmotor von einer Steuereinrichtung vorzugsweise derart beschleunigt, dass die die Klappe 34 verschwenkende Strömung sich schneller einstellt, als ein in dem Einlasskanal 46 herrschender und auf das Ventilelement 48 wirkender Druck. So wird erreicht, dass das Ventilelement 48 bewegt werden kann, bevor sich ein ausreichender Haltedruck aufbaut. Gleichzeitig tritt die Dichtfläche 50 an dem Ventilsitz 54 in Anlage und verschließt den ersten Einlasskanal 44. So wird nun die Flüssigkeit von dem Pumpenaggregat 12 durch den zweiten Kreis 7 und den Sekundärwärmetauscher 8 gefördert, während der Heizkreis 5 verschlossen ist. Über den Abzweigpunkt 4 überträgt sich jedoch der ausgangsseitige Druck des Pumpenaggregates 12 auch durch den geschlossenen Heizkreis 5 in den ersten Einlasskanal 44, so dass der Druck dort auf die Rückseite der Dichtfläche 50 bzw. auf die Stirnseite des Ventilelementes 48 wirkt. Dadurch wird die Dichtfläche 50 weiter gegen den Ventilsitz 54 gedrückt, welcher sich aufgrund seiner Elastizität um ein gewisses Maß verformt. Dadurch wird das Ventilelement 48 weiter linear verschoben, als es allein durch die Schwenkbewegung der Klappe 34 und des Hebels 36 verschoben wurde. Über die Kopplung wird dabei der Hebel 36 mit bewegt und die Klappe 34 im Wesentlichen aus dem Strömungsweg durch den Auslasskanalabschnitt 30 heraus verschwenkt, so dass der Strömungswiderstand minimiert wird. Wird das Pumpenaggregat ausgeschaltet, fällt der Druck auf die Stirnseite des Ventilelementes 48, welche von der Rückseite der Dichtfläche 50 gebildet wird, weg und die Rückstellfeder 58 bewegt das Ventilelement 48 wieder in die in Fig. 3 gezeigte Ausgangslage zurück.

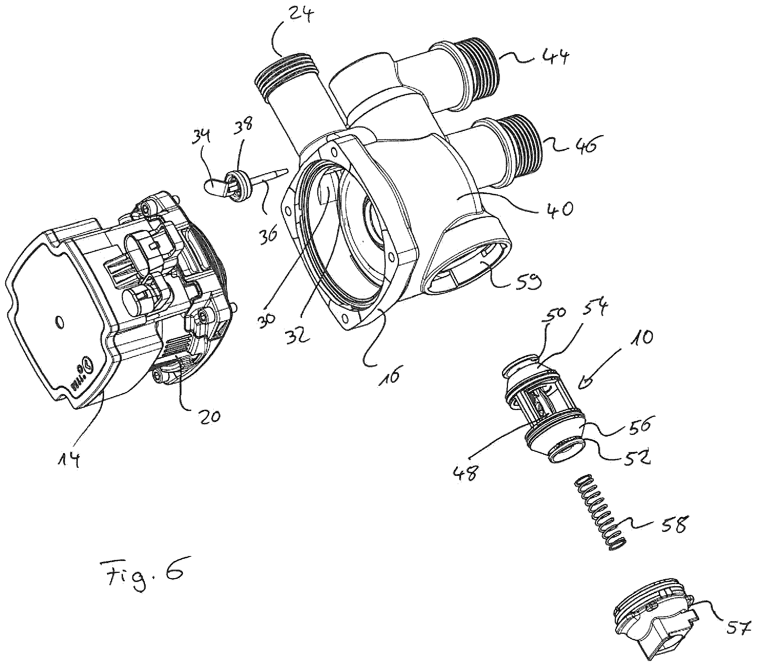

Fig. 6 veranschaulicht die Montage des Pumpenaggregates 12. Das Pumpengehäuse 16 ist einstückig mit dem Ventilgehäuse 40 ausgebildet. Das Ventil 10 ist als Einsatz in das Ventilgehäuse 40 durch eine Öffnung 59 eingesetzt, welche im Anschluss durch einen Deckel 57 verschlossen ist. Die Rückstellfeder 58 stützt sich an einem Ende an dem Ventilelement 48 und am entgegengesetzten Ende an der Innenseite des Deckels 57 ab. Die Klappe 34 mit dem Hebel 36 und der Dichtung 38 kann bei abgenommenen Antriebsmotor 20 durch die dem Antriebsmotor 20 zugewandte Öffnung des Pumpengehäuses 16 eingesetzt werden.

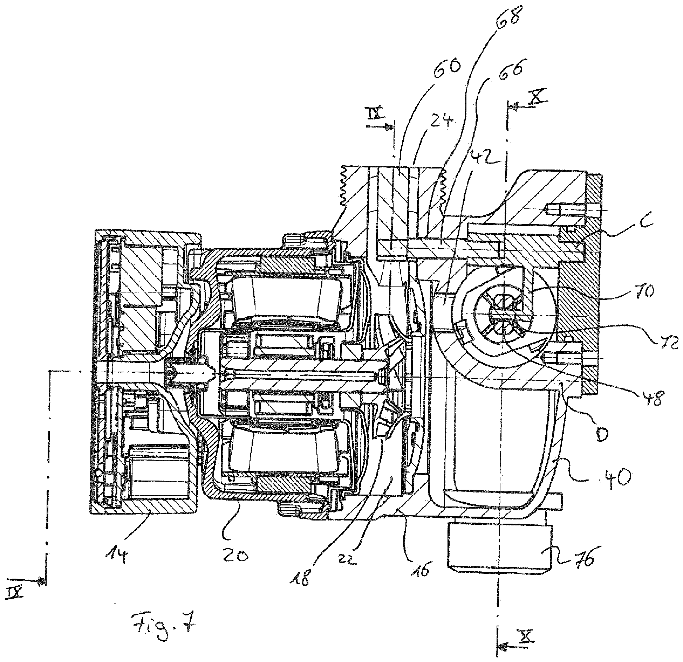

Die Fig. 7 bis 12 zeigen eine Variante des Pumpenaggregates 12, wie es vorangehend beschrieben wurde. In der nachfolgenden Beschreibung wird im Wesentlichen auf die Unterschiede eingegangen.

Die Anordnung des Laufrades 18 in dem Pumpengehäuse 16 mit dem umgebenden Ringraum 22 entspricht der Ausgestaltung in dem vorangehenden Ausführungsbeispiel. In diesem Ausführungsbeispiel weitet sich der Auslasskanal 24 ebenfalls zum Innenraum des Pumpengehäuses 16 hin auf, so dass Auslasskanalabschnitte 28 und 30 gebildet werden, welche jedoch nicht durch eine feste Wand voneinander getrennt sind, sondern durch eine Klappe 60, welche hier als Antriebselement dient. Die Klappe 60 weist eine Anströmfläche 62 an einer Seite und eine zweite Anströmfläche 44 an der entgegengesetzten Seite auf. Dreht sich das Laufrad 18 in der Drehrichtung A, wird die Strömung hauptsächlich in den Auslasskanalabschnitt 28 gelenkt und strömt die Anströmfläche 64 an, während bei einer Rotation des Laufrades in der Drehrichtung B die Strömung in erster Linie in den Auslasskanalabschnitt 30 gelenkt wird und die Anströmfläche 62 anströmt. Wird die Anströmfläche 62 angeströmt, verschwenkt die Klappe 60 um die Schwenkachse C in der Richtung b. Wenn die Anströmfläche 64 angeströmt wird, wird die Klappe 60 um die Schwenkachse C in der Richtung a verschwenkt.

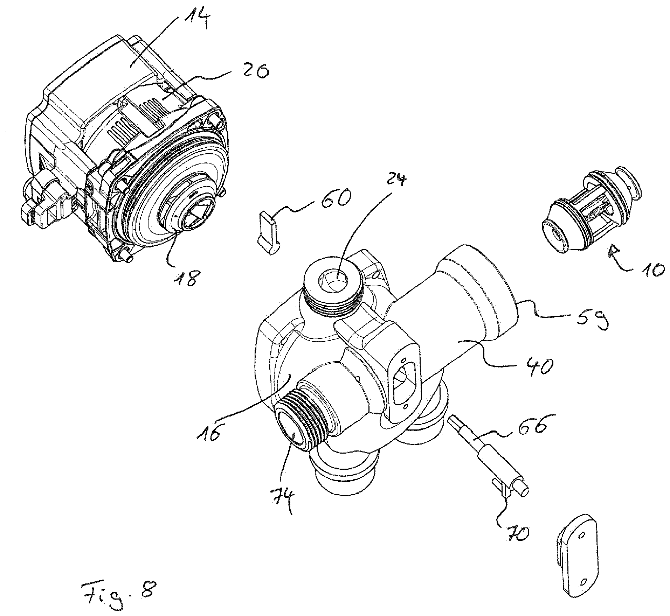

Die Klappe 60 ist drehfest mit einer Welle 66 verbunden, welche sich durch eine Wellendichtung 68 hindurch in das Ventilgehäuse 14 erstreckt. Auf die Wellendichtung 68 kann gegebenfalls verzichtet werden, wenn die Passung in der Durchführung für die Welle 66 entsprechend gewählt ist und/oder gegebenenfalls eine gewisse Undichtigkeit toleriert werden kann. In solch einem Fall wird die Wellendichtung 56 direkt von der Wandung des Pumpengehäuses bzw. des Ventilgehäuses 40 gebildet. Im Ventilgehäuse 14 endet die Welle 66 an einem Hebelarm 70, welcher sich ausgehend von der Welle 66 bezüglich der Schwenkachse C diametral entgegengesetzt zu der Klappe 60 erstreckt. Der Hebelarm 70 greift mit einem Zapfen 72 in das Ventilelement 48 ein. So verschwenkt sich bei Drehung der Klappe 60 ebenfalls der Hebelarm 70, wodurch das Ventilelement 48 in der oben beschriebenen Weise linear verschoben wird. Das Ventil 10 ist auch bei dieser Ausführungsform, wie in Fig. 8 zu sehen ist, als Einsatz 10 ausgebildet, welcher durch die Öffnung 59 in das Ventilgehäuse 40 eingeschoben ist. In diesem Ausführungsbeispiel weist das Ventilgehäuse 40 an dem der Öffnung 59 entgegengesetzten Ende zu Montagezwecken noch einen Anschluss 74 auf, welcher, wie in Fig. 7 gezeigt, durch eine Kappe 76 verschlossen ist.

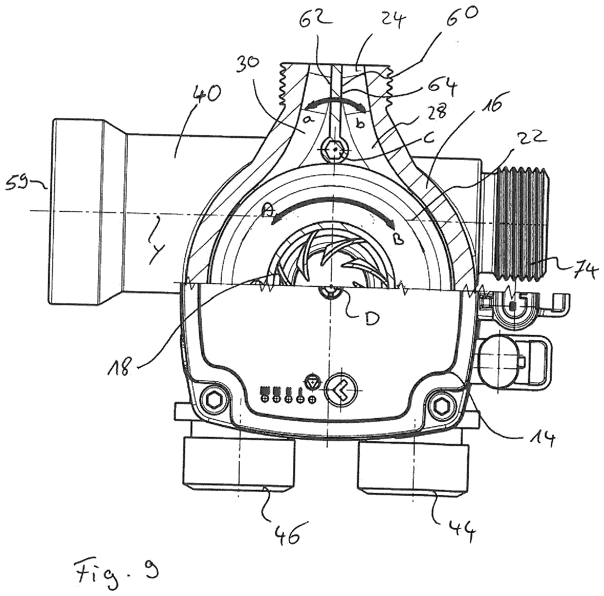

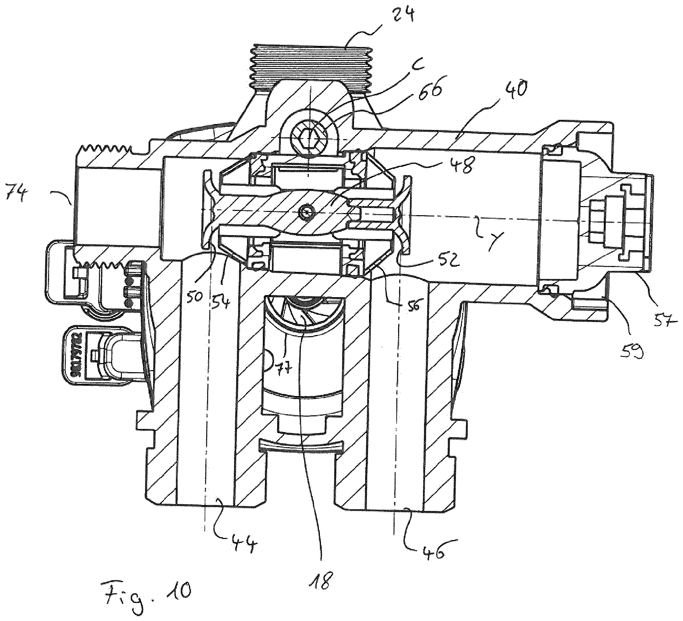

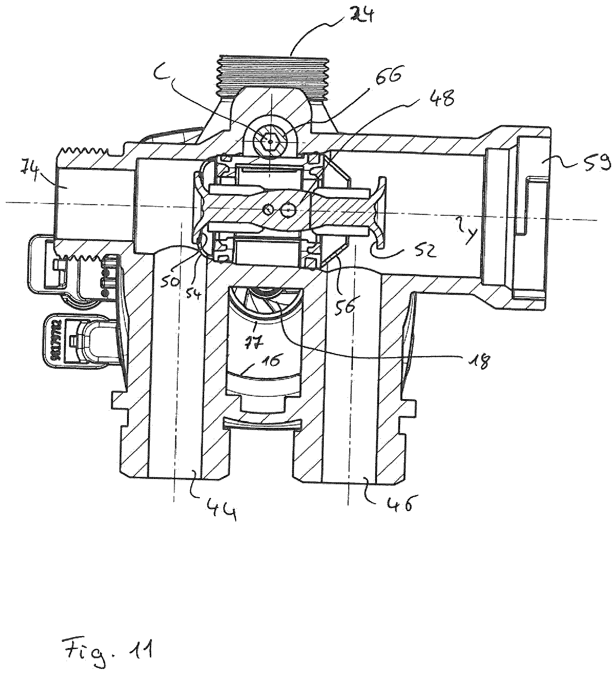

Fig. 9 zeigt eine Ruhelage der Klappe 62, in welcher diese sich im Wesentlichen radial zur Drehachse D des Laufrades 18 erstreckt. Es ist zu erkennen, dass auch hier die Klappe 62 wie die Klappe 34 vollständig außerhalb des freien Ringraumes 22 gelegen ist, das heißt mit ihrem radial inneren Ende genauso weit vom Außenumfang des Laufrades 18 beabstandet ist, wie die Innenwandung des Pumpengehäuses 16 im Umfangsbereich des Laufrades 18. In dieser Position befindet sich das Ventilelement 48 des Ventils 10, welches im Wesentlichen wie bei dem ersten Ausführungsbeispiel ausgebildet ist, in der in Fig. 10 gezeigten Mittelstellung, in welcher die Dichtfläche 52 von dem Ventilsitz 56 und die Dichtfläche 50 von dem Ventilsitz 54 abgehoben sind. In dieser Lage sind somit zunächst beide Einlasskanäle 44 und 46 geöffnet. Wird das Laufrad 18 in der Drehrichtung B angetrieben, verschwenkt die Klappe 60 wie beschrieben in der Richtung b, bis sie an der Wandung des Auslasskanals 24 vorzugsweise unter elastischer Verformung zur Anlage kommt. Dadurch wird über den Hebelarm 70 das Ventilelement 18 in die in Fig. 11 gezeigte Schaltstellung verschoben, in welcher die Dichtfläche 50 an dem Ventilsitz 54 in dichtende Anlage kommt. Dadurch wird der Einlasskanal 44, welcher mit dem Heizkreis 5 verbunden ist, geschlossen. Wie oben beschrieben, wirkt nun über den Einlasskanal 44 ebenfalls der ausgangsseitige Druck des Pumpenaggregates 12 auf die Stirnfläche des Ventilelementes 48 an der Rückseite der Dichtfläche 50, so dass das Ventilelement 48 unter elastischer Verformung des Ventilsitzes 54 weiter in axialer Richtung verlagert wird. Wird das Pumpenaggregat ausgeschaltet, federt die Klappe 60 aufgrund einer elastischen Verformung bei Anlage an der Wandung des Auslasskanals 24 wieder zurück. Auch die Entspannung des Dichtsitzes 54 bewirkt eine Rückstellkraft.

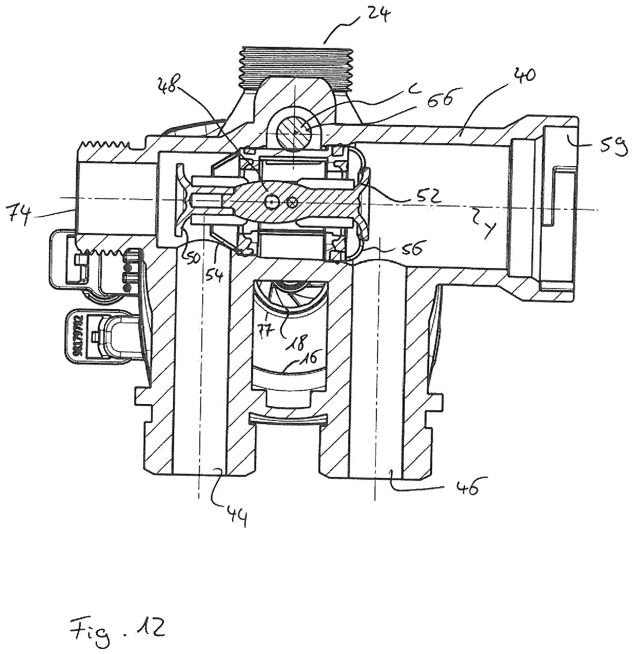

Wenn das Laufrad in entgegengesetzter Drehrichtung A angetrieben wird, verschwenkt die Klappe 60 wie beschrieben in der Richtung a bis sie an der Wandung es Auslasskanals 24 zur Anlage kommt und das Ventilelement 48 wird in die in Fig. 12 gezeigte zweite Schaltstellung bewegt, in welcher die Dichtfläche 50 von dem Ventilsitz 54 abgehoben ist und die Dichtfläche 52 des Ventilelementes 48 an dem Dichtsitz 56 zur Anlage kommt. Dadurch wird der Einlasskanal 46 geschlossen, während der Einlasskanal 44 geöffnet wird. So wird der Strömungsweg durch den Heizkreis 5 geöffnet und der Strömungsweg durch den Kreis 7 und den Sekundärwärmetauscher 8 geschlossen. Nun liegt durch den Kreis 7 der ausgangsseitige Druck an dem Einlasskanal 46 an, so dass dieser auf das axiale Stirnende des Ventilelementes 48 an der Rückseite der Dichtfläche 52 wirkt und die Dichtfläche 52 gegen den Ventilsitz 56 drückt, wobei dieser in der beschriebenen Weise gestaucht wird. So ist auch bei diesem Ausführungsbeispiel stets eine Selbsthaltefunktion des Ventils 10 gegeben, da das Ventilelement 48 zum Schließen stets so bewegt werden muss, dass die Dichtflächen 50, 52 in der jeweiligen Strömungsrichtung bewegt werden, so dass der in Strömungsrichtung in den Einlasskanälen 44 und 46 wirkende Druck jeweils die Dichtflächen in Anlage an dem zugehörigen Ventilsitz 54, 56 hält, wenn der jeweilige Ventilsitz 54, 56 durch die zugehörige Dichtfläche 50, 52 verschlossen wird.

Der Saugmund bzw. Einlauf 77 (siehe Fig. 10 bis 12) des Laufrades 18 weist bei allen hier beschriebenen Ausführungsbeispielen vorzugsweise einen Durchmesser zwischen 12 und 30 mm, weiter bevorzugt zwischen 12 und 25 mm auf, während der Radius r₁ des Laufrades 18 vorzugsweise zwischen 12 und 30 mm liegt.

### Bezugszeichenliste

- 2: Primärwärmetauscher
- 4: Abzweigpunkte
- 5: Heizkreis (erster Kreis)
- 6: Heizkörper
- 7: zweiter Kreis für die Brauchwassererwärmung
- 8: Sekundärwärmetauscher
- 10,: Ventil
- 12: Pumpenaggregat
- 14: Steuereinrichtung, Elektronikgehäuse
- 16: Pumpengehäuse
- 18: Laufrad
- 20: Antriebsmotor
- 22: Ringraum
- 24: Auslasskanal
- 26: Schaufeln
- 28, 30: Auslasskanalabschnitte
- 32: Trennelement
- 34: Klappe
- 36: Hebel
- 38: Dichtung
- 40: Ventilgehäuse
- 42: Verbindung
- 44, 46: Einlasskanäle
- 48: Ventilelement
- 54,56: Ventilsitze
- 57: Deckel
- 58: Rückstellfeder
- 59: Öffnung
- 60: Klappe
- 62, 64: Anströmflächen
- 66: Welle
- 68: Wellendichtung
- 70: Hebel
- 72: Zapfen
- 74: Anschluss
- 76: Kappe
- 77: Saugmund
- A, B: Drehrichtungen
- S₁, S₂: Strömungsrichtungen
- D: Drehachse
- S, C: Schwenkachsen
- Y: Achse
- Z: Mittelachse
- r₁: Radius des Laufrades
- r₂: Radius des Pumpengehäuses

## Patentansprüche

1. Pumpenaggregat mit zumindest einem Laufrad (18), welches zu seiner Drehung mit einem in zwei Drehrichtungen (A, B) antreibbaren elektrischen Antriebsmotor (20) verbunden ist, sowie zumindest einem in einem Einlass des Pumpenaggregates gelegenen Ventil (10), welches ein zwischen zumindest zwei Schaltstellungen bewegbares Ventilelement (48) aufweist und zu seiner Bewegung mit einem von der von dem Laufrad (18) erzeugten Strömung beaufschlagten Antriebselement (34, 60) verbunden ist, wobei das Pumpenaggregat zwei Einlasskanäle (44, 46) aufweist und das Ventil (10) als Umschaltventil zwischen den beiden Einlasskanälen (44, 46) ausgebildet ist,
wobei das Antriebselement (34, 60) eine Anströmfläche (62, 64) aufweist, welche in einem Auslasskanal (24) eines das Laufrad (18) umgebenden Pumpengehäuses (16) gelegen ist, und wobei die Anströmfläche (62, 64) von einer um eine Schwenkachse (S; C) schwenkbaren Klappe (34; 60) gebildet wird und die Klappe (34; 60) mit dem Ventilelement (48) zu dessen Bewegung gekoppelt ist,
**dadurch gekennzeichnet, dass**
das Ventilelement (48) zwischen den beiden Schaltstellungen linear bewegbar ist, das Ventilelement (48) in zumindest einer ersten der beiden Schaltstellungen einen Einlasskanal (44, 46) des Pumpenaggregates (12) verschließt und derart angeordnet ist, dass die Bewegungsrichtung in diese erste Schaltstellung der Strömungsrichtung (S₁, S₂) durch diesen Einlasskanal (44, 46) entspricht.

2. Pumpenaggregat nach Anspruch 1, **dadurch gekennzeichnet, dass** das Ventilelement (48) in einer ersten Schaltstellung einen ersten Einlasskanal (44) und in der zweiten Schaltstellung einen zweiten Einlasskanal (46) verschließt und dass das Ventilelement (48) so angeordnet ist, dass seine Bewegungsrichtung in die erste Schaltstellung der Strömungsrichtung (S₂) durch den ersten Einlasskanal (44) und seine Bewegungsrichtung in die zweite Schaltstellung der Strömungsrichtung (S₁) durch den zweiten Einlasskanal (46) entspricht.

3. Pumpenaggregat nach Anspruch 1 oder 2, **dadurch gekennzeichnet, dass** das Ventilelement zwei Dichtflächen (50, 52) und das Ventil zwei zugehörige Ventilsitze (54, 56) aufweist, von denen ein erster Ventilsitz (54) in dem ersten Einlasskanal (44) und ein zweiter Ventilsitz (56) in dem zweiten Einlasskanal (46) gelegen ist, wobei die beiden Ventilsitze (54, 56) vorzugsweise einander abgewandt sind.

4. Pumpenaggregat nach einem der vorangehenden Ansprüche, **dadurch gekennzeichnet, dass** zumindest eine Dichtfläche (50, 52) des Ventilelementes (48) und/oder ein Ventilsitz (54, 56), an welchem das Ventilelement (48) zur Anlage kommt, derart ausgestaltet sind, dass das Ventilelement (48) sich in der Bewegungsrichtung (y) nach Anlage an dem Ventilsitz (54, 56) um ein bestimmtes Maß weiter bewegen kann.

5. Pumpenaggregat nach einem der vorangehenden Ansprüche, **dadurch gekennzeichnet, dass** das Ventilelement (48) mit dem Antriebselement (34, 60) derart verbunden ist, dass das Antriebselement (34, 60) durch Bewegung des Ventilelementes (48) bewegbar ist.

6. Pumpenaggregat nach einem der vorangehenden Ansprüche, **dadurch gekennzeichnet, dass** die Klappe (60) in einem Auslasskanal (24) des Pumpengehäuses(16) derart angeordnet ist, dass bei einer ersten Drehrichtung (A) des Antriebsmotors die Klappe (60) von der von dem Laufrad (18) erzeugten Strömung an einer ersten Oberfläche (64) beaufschlagt wird und bei einer zweiten entgegengesetzten Drehrichtung (B) des Antriebsmotors (20) an einer zweiten von der ersten Oberfläche (64) abgewandten Oberfläche (62) beaufschlagt wird.

7. Pumpenaggregat nach einem der vorangehenden Ansprüche, **dadurch gekennzeichnet, dass** die Schwenkachse (C) der Klappe (60) sich parallel zu der Drehachse (D) des Laufrades (18) erstreckt.

8. Pumpenaggregat nach Anspruch 7, **dadurch gekennzeichnet, dass** das Pumpengehäuse zwei Auslasskanalabschnitte (28, 30) aufweist, welche zu dem Laufrad (18) derart gerichtet sind, dass bei einer ersten Drehrichtung (A) des Antriebsmotors die von dem Laufrad (18) erzeugte Strömung im Wesentlichen in einen ersten Auslasskanalabschnitt (28) und bei einer zweiten entgegengesetzten Drehrichtung (B) des Antriebsmotors (20) die von dem Laufrad (18) erzeugte Strömung im Wesentlichen in einen zweiten Auslasskanalabschnitt (30) gelenkt wird, wobei die schwenkbare Klappe (34) in dem ersten oder dem zweiten Auslasskanalabschnitt (28) angeordnet ist.

9. Pumpenaggregat nach Anspruch 8, **dadurch gekennzeichnet, dass** die beiden Auslasskanalabschnitte (28, 30) durch eine Trennwand (32) getrennt sind.

10. Pumpenaggregat nach einem der vorangehenden Ansprüche, **dadurch gekennzeichnet, dass** das Ventilelement (48) und das Antriebselement (34; 50) eine definierte Ruhelage haben, wobei vorzugsweise Rückstellmittel (58) vorhanden sind, welche das Antriebselement (34; 60) und/oder das Ventilelement (48) mit einer in die Ruhelage gerichteten Kraft beaufschlagen.

11. Pumpenaggregat nach einem der vorangehenden Ansprüche, **dadurch gekennzeichnet, dass** das Laufrad (18) in einem Pumpengehäuse (16) angeordnet ist und das Ventilelement (48) in einem Ventilgehäuse (40) angeordnet ist, wobei das Antriebselement (34; 60) in dem Pumpengehäuse (16) angeordnet ist und das Antriebselement (34; 60) mit dem Ventilelement (48) zur Kraftübertragung über zumindest ein Kraftübertragungselement (36; 66) gekoppelt ist.

12. Pumpenaggregat nach einem der vorangehenden Ansprüche, **dadurch gekennzeichnet, dass** das Laufrad (18) in einem Pumpengehäuse (16) angeordnet ist, dessen Innenradius (r₂) im Umfangsbereich des Laufrades mindestens 1,4 mal so groß, vorzugsweise mindestens 2 mal so groß wie der Radius (r₁) des Laufrades ist.

13. Pumpenaggregat nach einem der vorangehenden Ansprüche, **dadurch gekennzeichnet, dass** das Laufrad (18) gekrümmte, vorzugsweise in zwei Richtungen gekrümmte Schaufeln (26) aufweist, wobei die Schaufeln (26) vorzugsweise eine Krümmung aufweisen, welche derjenigen Drehrichtung (A), in welcher das Laufrad (18) überwiegend betrieben wird, angepasst ist.

14. Hydraulisches System mit zumindest zwei hydraulischen Kreisen (5, 7), **gekennzeichnet durch** ein Pumpenaggregat (12) nach einem der vorangehenden Ansprüche, wobei der Strömungsweg für eine von dem Pumpenaggregat geförderte Flüssigkeit zwischen den beiden hydraulischen Kreisen (5, 7) mittels dem Ventil (10) umschaltbar ist.

## Claims

1. A pump assembly with at least one impeller (18), which for its rotation is connected to an electrical drive motor (20) which can be driven in two rotation directions (A, B), as well as with at least one valve (10) which is situated in an inlet of the pump assembly and which comprises a valve element (48) which is movable between at least two switch positions and for its movement is connected to a drive element (34, 60) which is subjected to the flow produced by the impeller (18), wherein the pump assembly comprises two inlet channels (44, 46), and the valve (10) is designed as a switch- over valve between the two inlet channels (44, 46), wherein the drive element (34, 60) comprises an onflow surface (62, 64) which is situated in an outlet channel (24) of a pump casing (16) surrounding the impeller (18) and wherein the onflow surface (62, 64) is formed by a flap (34; 60) which is pivotable about a pivot axis (S, C), and the flap (34; 60) is coupled to the valve element (48) for its movement, **characterised in that**
the valve element (48) is movable between the two switching positions, the valve element (48) in at least a first of the two switch positions closes an inlet channel (44, 46) of the pump assembly (12) and is arranged in a manner such that the movement direction into this first switch position corresponds to the flow direction (S₁, S₂) through this inlet channel (44, 46).

2. A pump assembly according to claim 1, **characterised in that** the one valve element (48) in a first switch position closes a first inlet channel (44) and in the second switch position closes a second inlet channel (46), and that the valve element (48) is arranged such that its movement direction into the first switch position corresponds to the flow direction (S₂) through the first inlet channel (44) and its movement direction into the second switch position corresponds to the flow direction (S₁) through the second inlet channel (46).

3. A pump assembly according to claim 1 or 2, **characterised in that** the valve element comprises two sealing surfaces (50, 52) and the valve comprises two associated valve seats (54, 56), of which a first valve seat (54) is situated in the first inlet channel (44) and a second valve seat (56) in the second inlet channel (46), wherein the two valve seats (54, 56) are preferably away from one another.

4. A pump assembly according to one of the preceding claims, **characterised in that** at least one sealing surface (50, 52) of the valve element (48), and/or a valve seat (54, 56) on which the valve element (48) comes to bear, are designed in a manner such that the valve element (48) can move further by a certain amount in the movement direction (y) after contact on the valve seat (54, 56).

5. A pump assembly according to one of the preceding claims, **characterised in that** the valve element (48) is connected to the drive element (34, 60) in a manner such that the drive element (34, 60) is movable by way of movement of the valve element (48).

6. A pump assembly according to one of the preceding claims, **characterised in that** the flap (60) is arranged in an outlet channel (24) of the pump casing (16) in a manner such that the flap (60) is subjected to the flow produced by the impeller (18), on a first surface (64) given a first rotation direction (A) of the drive motor, and on a second surface (62) which is away from the first surface (64) given a second, opposite rotation direction (B) of the drive motor (20).

7. A pump assembly according to one of the preceding claims, **characterised in that** the pivot axis (C) of the flap (60) extends parallel to the rotation axis (D) of the impeller (18).

8. A pump assembly according to claim 7, **characterised in that** the pump casing comprises two outlet channel sections (28, 30) which are directed to the impeller (18) in a manner such that with a first rotation direction (A) of the drive motor, the flow which is produced by the impeller (18) is guided essentially into a first outlet channel section (28), and with a second opposite rotation direction (B) of the drive motor (20), the flow produced by the impeller (18) is guided essentially into a second outlet channel section (30), wherein the pivotable flap (34) is arranged in the first or the second outlet channel section (28).

9. A pump assembly according to claim 8, **characterised in that** the two outlet channel sections (28, 30) are separated by a separating wall (32).

10. A pump assembly according to one of the preceding claims, **characterised in that** the valve element (48) and the drive element (34; 50) have a defined idle position, wherein preferably restoring means (58) are present, which subject the drive element (34; 60) and/or the valve element (48) to a force directed into the idle position.

11. A pump assembly according to one of the preceding claims, **characterised in that** the impeller (18) is arranged in a pump casing (16), and the valve element (48) is arranged in a valve housing (40), wherein the drive element (34; 60) is arranged in the pump casing (16) and the drive element (34; 60) is coupled to the valve element (48) via at least one force transmission element (36; 66), for transmitting force.

12. A pump assembly according to one of the preceding claims, **characterised in that** the impeller (18) is arranged in a pump casing (16) whose inner radius (r₂) in the peripheral region of the impeller is at least 1.4 times as large, preferably at least 2 times as large as the radius (r₁) of the impeller.

13. A pump assembly according to one of the preceding claims, **characterised in that** the impeller (18) comprises arcuate blades (26) which are preferably arcuate in two directions, wherein the blades (26) preferably have a curvature which is adapted to that rotation direction (A), in which the impeller (18) is predominantly operated.

14. A hydraulic system with at least two hydraulic circuits (5, 7), **characterised by** a pump assembly (12) according to one of the preceding claims, wherein the flow path for a fluid delivered by the pump assembly can be switched between the two hydraulic circuits (5, 7) by way of the valve (10).

## Revendications

1. Groupe motopompe comportant au moins une roue mobile (18), qui est reliée pour sa rotation à un moteur électrique d'entraînement (20) qui peut être entraîné dans deux sens de rotation (A, B), et au moins une soupape (10) située dans une entrée du groupe motopompe, laquelle possède un élément de soupape mobile (48) entre au moins deux positions de commutation et est reliée pour son mouvement à un élément d'entraînement (34, 60) soumis à l'action de l'écoulement généré par la roue mobile (18), dans lequel le groupe motopompe présente deux canaux d'entrée (44, 46) et la soupape (10) est conçue comme une vanne de commutation entre les deux canaux d'entrée (44, 46),
dans lequel l'élément d'entraînement (34, 60) présente une surface frontale (62, 64), qui est située dans un canal de sortie (24) d'un carter de pompe (16) entourant la roue mobile (18), et dans lequel la surface frontale (62, 64) est formée par un volet pivotant autour d'un axe de pivotement (S ; C) (34 ; 60) et le volet (34 ; 60) est couplé à l'élément de soupape (48) pour son mouvement,
**caractérisé en ce que** l'élément de soupape (48) peut être déplacé linéairement entre les deux positions de commutation, l'élément de soupape (48) ferme un canal d'entrée (44, 46) du groupe motopompe (12) dans au moins une première des deux positions de commutation et est agencé de telle sorte que le sens de déplacement dans cette première position de commutation correspond au sens d'écoulement (S₁, S₂) à travers ce canal d'entrée (44, 46).

2. Groupe motopompe selon la revendication 1, **caractérisé en ce que** l'élément de soupape (48) ferme un premier canal d'entrée (44) dans une première position de commutation et un deuxième canal d'entrée (46) dans la deuxième position de commutation, et **en ce que** l'élément de soupape (48) est agencé de telle sorte que son sens de déplacement dans la première position de commutation correspond à la direction d'écoulement (S₂) à travers le premier canal d'entrée (44) et son sens de déplacement dans la deuxième position de commutation correspond à la direction d'écoulement (S₁) à travers le deuxième canal d'entrée (46).

3. Groupe motopompe selon la revendication 1 ou 2, **caractérisé en ce que** l'élément de soupape présente deux surfaces d'étanchéité (50, 52) et la soupape présente deux sièges de soupape associés (54, 56), parmi lesquels un premier siège de soupape (54) est placé dans le premier canal d'entrée (44) et un deuxième siège de soupape (56) est placé dans le deuxième canal d'entrée (46), les deux sièges de soupape (54, 56) étant de préférence orientés à l'opposé l'un à l'autre.

4. Groupe motopompe selon l'une des revendications précédentes, **caractérisé en ce qu'**au moins une surface d'étanchéité (50, 52) de l'élément de soupape (48) et/ou un siège de soupape (54, 56) contre lequel l'élément de soupape (48) vient en contact sont conçus de façon telle que l'élément de soupape (48) peut se déplacer dans la direction de mouvement (y) d'une certaine quantité après mise en contact avec le siège de soupape (54, 56).

5. Groupe motopompe selon l'une des revendications précédentes, **caractérisé en ce que** l'élément de soupape (48) est relié à l'élément d'entraînement (34, 60) de façon telle que l'élément d'entraînement (34, 60) peut être déplacé par le mouvement de l'élément de soupape (48).

6. Groupe motopompe selon l'une des revendications précédentes, **caractérisé en ce que** le volet (60) est disposé dans un canal de sortie (24) du carter de pompe (16) de façon telle que le volet (60) est sollicité par l'écoulement généré par la roue mobile (18) au niveau d'une première surface (64) et est sollicité au niveau d'une seconde surface (62) orientée à l'opposé de la première surface (64) dans un deuxième sens de rotation opposé (B) du moteur d'entraînement (20).

7. Groupe motopompe selon l'une des revendications précédentes, **caractérisé en ce que** l'axe de pivotement (C) du volet (60) s'étend parallèlement à l'axe de rotation (D) de la roue mobile (18).

8. Groupe motopompe selon la revendication 7, **caractérisé en ce que** le carter de pompe présente deux sections de canal de sortie (28, 30) qui sont orientées par rapport à la roue mobile (18) de façon telle que l'écoulement généré par la roue mobile (18) dans un premier sens de rotation (A) du moteur d'entraînement est essentiellement dirigé dans une première section de canal de sortie (28), et que dans un second sens de rotation opposé (B) du moteur d'entraînement (20), l'écoulement généré par la roue mobile (18) est essentiellement dirigé dans une deuxième section de canal de sortie (30), le volet pivotant (34) étant disposé dans la première ou la deuxième section de canal de sortie (28).

9. Groupe motopompe selon la revendication 8, **caractérisé en ce que** les deux sections de canal de sortie (28, 30) sont séparées par une cloison (32).

10. Groupe motopompe selon l'une des revendications précédentes, **caractérisé en ce que** l'élément de soupape (48) et l'élément d'entraînement (34 ; 50) ont une position de repos définie, et **en ce qu'**il existe des moyens de rappel (58) qui appliquent sur l'élément d'entraînement (34 ; 60) et/ou sur l'élément de soupape (48) une force dirigée vers la position de repos.

11. Groupe motopompe selon l'une des revendications précédentes, **caractérisé en ce que** la roue mobile (18) est disposée dans un carter de pompe (16) et **en ce que** l'élément de soupape (48) est disposé dans un carter de soupape (40), l'élément d'entraînement (34 ; 60) étant disposé dans le carter de pompe (16) et l'élément d'entraînement (34 ; 60) étant couplé à l'élément de soupape (48) pour une transmission de puissance via au moins un élément de transmission de puissance (36 ; 66).

12. Groupe motopompe selon l'une des revendications précédentes, **caractérisé en ce que** la roue mobile (18) est disposée dans un carter de pompe (16) dont le rayon intérieur (r₂) dans la zone périphérique de la roue est au moins 1,4 fois plus grand, de préférence au moins 2 fois plus grand, que le rayon (r₁) de la roue mobile.

13. Groupe motopompe selon l'une des revendications précédentes, **caractérisé en ce que** la roue mobile (18) présente des pales (26) incurvées, de préférence incurvées dans les deux sens, les pales (26) ayant de préférence une courbure qui est adaptée au sens de rotation (A) dans lequel la roue mobile (18) est principalement exploitée.

14. Système hydraulique comportant au moins deux circuits hydrauliques (5, 7), **caractérisé par** un groupe motopompe (12) selon l'une des revendications précédentes, le trajet d'écoulement d'un liquide transporté par le groupe motopompe pouvant être commuté entre les deux circuits hydrauliques (5, 7) au moyen de la soupape (10).
